# EUROPEAN PATENT SPECIFICATION

(11) **EP 4 261 056 B1**
(45) Date of publication and mention of the grant of the patent: **11.06.2025**
(21) Application number: 22167788.3
(22) Date of filing: 12.04.2022
(51) Int. Cl.: B60G 11/04, F16F 1/18, F16F 1/26, B60G 11/42

(54) **A LEAF SPRING ARRANGEMENT FOR USE IN A VEHICLE SUSPENSION**
BLATTFEDERANORDNUNG ZUR VERWENDUNG IN EINER FAHRZEUGAUFHÄNGUNG
AGENCEMENT DE RESSORT À LAME À UTILISER DANS UNE SUSPENSION DE VÉHICULE

(43) Date of publication of application: 18.10.2023
(73) Proprietor: VOLVO TRUCK CORPORATION, 405 08 Göteborg (SE)
(72) Inventor: LÖFGREN, Jonas, 416 78 Göteborg (SE); PREIJERT, Stefan, 415 07 Göteborg (SE)
(74) Representative: Zacco Sweden AB

(56) References cited:
- CN-U- 209 776 070
- DE-A1- 102014 202 581
- DE-B4- 102005 032 611
- JP-U- S5 370 016
- JP-U- S5 728 007
- JP-U- S57 128 503
- KR-A- 20050 023 899
- US-A- 3 685 812
- US-A1- 2004 080 135
- US-B2- 11 001 113

## Description

### TECHNICAL FIELD

The present disclosure relates to a leaf spring arrangement for use in a vehicle suspension. The present disclosure also relates to a vehicle suspension comprising such a leaf spring arrangement. The present disclosure further relates to a vehicle comprising such a leaf spring arrangement or such a vehicle suspension.

The teachings of the present disclosure can be applied in heavy-duty vehicles, such as trucks, buses and construction equipment. Although the present disclosure will focus on a heavy-duty vehicle, the general inventive concept is not restricted to this particular vehicle, but may also be used in other vehicles such as cars.

### BACKGROUND

In vehicle suspensions where a rigid axle is located and controlled by leaf springs, many compromises have to be made. Such compromises can adversely reflect on the suspension performance under various loading conditions to which it is subjected during the operation of the vehicle. Examples of such a loading condition is vehicle roll about the longitudinal roll centre which occurs when the vehicle is negotiating a bend or is subjected to forces induced by strong winds in the transverse direction. A further loading is termed "bump steer", which occurs when one or two sides of the axle are deflected upwards by an obstacle on the road surface.

US 11,001,113 B2 discloses a vehicle suspension in which an elastic stop element is provided to improve the handling and driving comfort during vertical loads (such as the above mentioned "bump steer"). The elastic stop element is deformed and provides a higher effective spring constant after a limit load is exceeded and the elastic stop element becomes involved. The elastic stop element also prevents the vehicle axle and the U-shaped leaf spring from striking against the vehicle structure under large vertical load.

The documents CN209776070 U, JPS5370016 U, JPS57128503 U, DE102014202581 A1, US3685812 A, US2004/080135 A1, JPS5728007 U, KR20050023899 A, DE102005032611 B4 show leaf spring arrangements for use in a vehicle suspension.

However, another frequently occurring loading condition is during braking, at which the wheel axle is subjected to a brake torque moment. The above-identified prior art arrangement is not configured to handle such brake torque loads. Thus, there is still room for improvement when it comes to handling characteristics.

### SUMMARY

An object of the invention is to provide a leaf spring arrangement with improved handling characteristics, in particular when it comes to loading condition caused by braking of a vehicle. This and other objects, which will become apparent in the following discussion, are achieved by a leaf spring arrangement according to the accompanying independent claim. Some non-limiting exemplary embodiments are presented in the dependent claims.

The inventors have realized that by providing a vehicle suspension in which the leaf spring extends downwardly from a shackle connected to one end of the leaf spring, but upwardly from the other end of the leaf spring, an improved handling of loading conditions caused by braking may be accomplished. Such a shape of a leaf spring is appropriate for taking up braking torque moments provided at a wheel axle to which the leaf spring may be connected. However, the inventors have also realized that such a shape of the leaf spring, because of its superior ability to extend at a braking load, it may also become subjected to high and repeated local stresses, which may reduce the life time of the leaf spring. In particular, an area of the leaf spring between the wheel axle and the shackle may be subjected to high stresses upon braking. Therefore, in order to provide a leaf spring arrangement which is good at taking up braking torque moments and at the same time can have a long life expectancy, the inventors have provided a stop member to limit the extension of the leaf spring. Hereby, braking loads can be at least partly absorbed without overstressing the leaf spring. It should be understood that the stop member of this disclosure has a stress reducing purpose, which is different from the purpose of the prior art elastic stop element, which was provided for improving vertical load handling and for providing a further restoring force based on the elastic deformation of the elastic stop element.

According to a first aspect of the present disclosure, there is provided a leaf spring arrangement for use in a vehicle suspension, comprising:
- a leaf spring which comprises:
   - a lower surface configured to face downwardly towards the ground,
   - an upper surface which is located opposite to the lower surface and which is configured to face upwardly,
   - a first end,
   - a second end,
   wherein the upper surface and the lower surface extend longitudinally from the first end to the second end,
   - a first bracket configured to be attached rigidly to a vehicle frame at a first frame position,
   - a second bracket configured to be attached rigidly to the vehicle frame at a second frame position,
   - a shackle pivotally connected to the second bracket,
   - a stop member restricting the pivoting movement of the shackle, wherein the stop member limits the extension of the leaf spring,

   wherein the first end of the leaf spring is connected to the first bracket,
   wherein the second end of the leaf spring is connected to the shackle in order to compensate for length changes of the leaf spring in response to brake torque loads on the leaf spring, wherein the leaf spring arrangement at least partly absorbs brake torque loads without overstressing the leaf spring due to the stop member limiting the extension of the leaf spring,
   wherein the leaf spring extends downwardly from the shackle, and
   wherein the leaf spring extends upwardly from its first end.

By having one end of the leaf spring extending upwardly from its first end, and having the other end of the leaf spring extending downwardly from the shackle, which is connected to the second bracket, and restricting the pivoting movement of the shackle, a leaf spring arrangement is provided which can take up brake torque loads without overstressing the leaf spring.

Furthermore, in contrast to a U-shaped leaf spring, by having one end of the leaf spring extending upwardly and one end extending downwardly, a leaf spring resembling to an S-shape can be provided. When subjected to braking loads, a horizontal force component may extend/stretch the S-shape as the second end is moved backwards upon such braking. Thus, the effective length (i.e. the straight line distance) between the first end and the second end will becomes longer during such braking.

It should be understood that the stop member may be any stop member that has the capability to restrict the pivoting movement of the shackle. Indeed it should be understood that it is the limitation of the stresses induced in the leaf spring that is of importance, i.e. the limitation of the stretching of the leaf spring during braking, and therefore the specific manner in which such limitation is achieve is of secondary importance. Just to mention a few examples, the stop member may be in the form of a physical abutment which the shackle hits when pivoting, or it may be in the form of a torsional limitation in the actual suspension of the shackle to the second bracket, or it may be in the form of a track in which a matching portion of the shackle is guided to an end of the track, etc.

The leaf spring is intended to be mounted to a vehicle such that the first end is closer to the front of the vehicle, while the second end of the leaf spring is closer to the rear of the vehicle. Thus, the first end of the leaf spring may also be referred to as a front end, and the second end of the leaf spring may also be referred to as a rear end. Similarly, the first frame position and the second frame position may suitably be regarded, relative to each other, as a front frame position and a rear frame position, respectively. Thus, the first bracket may in such case be referred to as a front bracket and the second bracket may be referred to as a rear bracket.

In addition, as understood from above, the leaf spring also has an intended orientation relative to the ground when properly mounted. The lower surface is intended to face the ground, while the upper surface is intended to face away from the ground, when the leaf spring is properly mounted to the vehicle as part of a vehicle suspension. Suitably, the lower surface of the leaf spring may be in contact with a vehicle axle when the leaf spring is in its mounted position. From the above, it should thus also be understood that directional terms such as downwardly, lower, below, etc. are terms relative to the ground on which a vehicle stands. Thus, downwardly is in a direction towards the ground, while upwardly is in a direction away from the ground. Similarly, if a first component is located at a lower level than a second component, then the first component is located closer to the ground.

According to at least one exemplary embodiment, the stop member is configured to prevent the shackle from reaching an instability position in which the shackle would lose its bearing capacity with respect to the leaf spring.

The instability position may, for instance, be a horizontal extension of the shackle from its connection to the second bracket. In such case, as long as the shackle extends downwardly from the second bracket, the shackle will have a bearing force on the leaf spring. But if the shackle would pivot up to a completely horizontal position, or beyond, then it will no longer have such a bearing/carrying capacity with respect to the leaf spring. By allowing the shackle to pivot almost all the way to its instability position, the vertical stiffness of the spring can be lowered significantly. This is advantageous from a driving comfort perspective, while still maintaining the bearing capacity of the shackle.

According to at least one exemplary embodiment, the leaf spring of the leaf spring arrangement comprises:
- an axle attachment portion located between the first end and the second end, the axle attachment portion being configured to be attached to an axle such that the longitudinal extension of the upper and lower surface of the leaf spring is directed transversely to the axle,
- a first upwardly facing convex portion formed between the first end and the axle attachment portion, and
- a second upwardly facing concave portion formed between the axle attachment portion and the second end.

By having a first upwardly facing convex portion formed between the first end and the axle attachment portion, in combination with a second upwardly facing concave portion formed between the axle attachment portion and the second end, the wind-up centre can be higher when the leaf spring is mounted as part of a vehicle suspension, even though the distance to the datum line is increased compared to other vehicle suspensions. This allows for improved handling characteristics.

In vehicle suspensions, the above mentioned "datum line" is referred to as an imaginary reference line between the front and rear leaf spring end eyes. A common design goal is to maximize the distance between the datum line and the axle attachment portion of the leaf spring, since a large distance enables increased wheel motion, improved comfort and increased packaging space for an air spring. However, the inventors have realized that the handling properties are compromised if said distance from the datum line is increased, because the wind-up centre will be at a too low level. The wind-up centre is the imaginary point on the leaf spring centre part standing relatively still during braking. The ball joint of the steering arm (attached to the steering knuckle) should desirable be located at the wind-up centre. However, if the wind-up centre is located at a too low level, then it is very difficult to find a steering arm that does not conflict with the axle. By providing a convex leaf spring portion on one side of the axle attachment portion and a concave leaf spring portion on the other side of the axle attachment portion, the wind-up centre can be provided at a high level (i.e. far from the ground) even though said distance to the datum line is increased compared to the distance that is practically possible in the prior art leaf springs. Hereby, improved handling characteristics are obtainable even with a large distance to the datum line.

According to at least one exemplary embodiment, the stop member is configured to prevent the shackle from pivoting beyond a predefined angle, wherein, when the shackle is pivoted to said predefined angle and thereby extends the leaf spring, the second upwardly facing concave portion of the leaf spring maintains an upwardly facing concave shape although presenting a larger radius of curvature than its original upwardly facing concave shape.

In line with the above discussions, this is advantageous, as the upwardly facing convex portion and the upwardly facing concave portion in combination with the stop member provides good handling of braking loads while avoiding high stresses in the leaf spring.

According to at least one exemplary embodiment, the axle attachment portion is the thickest portion of the leaf spring. This reduces the risk of undesirable stress in the axle attachment portion when the leaf spring forms part of a vehicle suspension subjected to loads. In at least some exemplary embodiments, the lower surface of the axle attachment portion of the leaf spring is planar in order to match a corresponding planar portion of the axle. Suitably, the first upwardly facing convex portion is void of any planar subportion. Similarly, the second upwardly facing concave portion is suitably void of any planar subportion. Thus, in at least some exemplary embodiments, the first upwardly facing convex portion extends in a continuous curved path from the axle attachment portion to the first end. Similarly, in at least some exemplary embodiments, the second upwardly facing concave portion extends in a continuous curved path from the axle attachment portion the second end.

According to at least one exemplary embodiment, the second upwardly facing concave portion extends upwardly from the axle attachment portion to the second end. This is advantageous as it allows the wind-up centre to be positioned at a high level.

According to at least one exemplary embodiment, the second upwardly facing concave portion is formed by:
- a first subportion, which extends downwardly from the axle attachment portion to a lowest point of the second upwardly facing concave portion, and
- a second subportion which extends upwardly from said lowest point to the second end. This is advantageous as it may allow the wind-up centre to be positioned higher compared to a flat or an upwardly facing convex rear portion.

According to at least one exemplary embodiment, the second subportion has a steeper slope from said lowest point to the second end compared to the slope of the first subportion from the lowest point to the axle attachment portion.

Since the second subportion is configured to lean upwards in order for the leaf spring to get back to the datum line from said lowest point, it may advantageously be configured with a steep slope. By providing a steep slope of the second subportion a shorter offset is obtainable between the leaf spring end eye at the second end and the frame of the vehicle. This in turn allows the shackle, which may be configured to engage the leaf spring eye, to be made smaller and therefore the bracket to which the shackle is attachable can be made lighter.

According to at least one exemplary embodiment, the extension of the second subportion forms a curved path from said lowest point to the second end, wherein the smallest radius of curvature of the second subportion is smaller than any radius of curvature of the first subportion. This too provides the advantage of allowing for a smaller shackle and lighter bracket to be used in a vehicle suspension.

According to at least one exemplary embodiment, the first end comprises a first end eye and the second end comprises a second end eye, wherein the shortest distance between said first and second end eyes defines a geometrical datum line, wherein
- an intermediate point on the datum line is separated from the centre of the axle attachment portion by a distance C, which is the shortest distance between the centre of the axle attachment portion and the datum line,
- the first end eye is separated from said intermediate point by a predetermined first length A along said datum line,
- the second end eye is separated from said intermediate point by a predetermined second length B along said datum line.

According to at least one exemplary embodiment, the relationship between said distance C, said predetermined first length A, and said predetermined second length B is: C > (A+B)/X where X is 80, suitably 30, more suitably 15.

By increasing the distance C, an increased wheel motion is enabled. Furthermore, driver comfort is improved and the packaging space for an optional air spring is increased. The above relationship may also be expressed as the distance (A+B) between the first and second eyes divided by said shortest distance (C) between the centre of the axle attachment portion and the datum line is less than 80, suitably less than 30, more suitably less than 15.

According to at least one exemplary embodiment, a first straight imaginary geometrical line is drawable between the end points of the first upwardly facing convex portion, from the first end to the axle attachment portion, wherein perpendicularly to the first straight imaginary geometrical line the largest distance a between the first straight imaginary geometrical line and the first upwardly facing convex portion is defined as a > A/Y where Y is 80, suitably 30, more suitably 20.

By configuring the first upwardly facing convex portion with a large distance a, positive handling characteristics are achievable. The distance a can be regarded as a measure of how much the first upwardly facing convex portion bulges upwardly.

According to at least one exemplary embodiment, a second straight imaginary geometrical line is drawable between the end points of the second upwardly facing concave portion, from the second end to the axle attachment portion, wherein perpendicularly to the second straight imaginary geometrical line the largest distance b between the second straight imaginary geometrical line and the second upwardly facing concave portion is defined as *b* > B/Z wherein Z is 80, suitably 30, more suitably 20. By configuring the second upwardly facing concave portion with a large distance b, positive handling characteristics are achievable. The distance b can be regarded as a measure of how much the second upwardly facing concave portion bulges downwardly.

The above discussed distances *a, b* and C have been found to result in an advantageous leaf spring when in use in a vehicle suspension of a vehicle. In particular, such a leaf spring having the geometry with the above discussed distances *a, b* and C reduces the reaction forces that deform the axle and the leaf spring of prior art vehicle suspensions. The present leaf spring provides axle steer effects which give a desirable understeering behaviour. Because of this advantageous effects, when the present leaf spring is used in a vehicle suspension there is no need for a large rear spring anchorage with large offset, thus saving both weight and cost, and additionally providing ample space for an optional auxiliary spring. Together with the stop member, it provides highly desirable handling properties, in particular when it comes to taking up braking loads without overstressing the leaf spring.

According to a second aspect of the present disclosure, there is provided a vehicle suspension comprising a leaf spring arrangement according to the first aspect, including any embodiment thereof.

The advantages of the vehicle suspension of the second aspect are largely analogous to the advantages of the leaf spring arrangement of the first aspect, including any embodiment thereof.

According to at least one exemplary embodiment of the vehicle suspension of the second aspect, said leaf spring arrangement is a first leaf spring arrangement, the vehicle suspension further comprising:
- a second leaf spring arrangement according to the first aspect, including any embodiment thereof, and
- an axle configured to extend transversely of the vehicle frame, which axle is mounted to the two leaf springs of the respective leaf spring arrangements at said axle attachment portions.

The first and the second leaf spring arrangements may suitably have corresponding features.

It should be understood that the vehicle suspension may, in at least some exemplary, embodiments comprise a stack of leaf springs in the first leaf spring arrangement (at one end of the axle) and a stack of leaf springs in the second leaf spring arrangement (at the other end of the axle), wherein the lowermost leaf spring in each stack is in contact with the axle.

According to a third aspect of the present disclosure, there is provided a vehicle comprising a leaf spring arrangement according to the first aspect (including any embodiment thereof) or a vehicle suspension according to the second aspect (including any embodiment thereof).

The advantages of the vehicle of the third aspect are largely analogous to the advantages of the leaf spring arrangement of the first aspect, including any embodiment thereof.

Generally, all terms used in the claims are to be interpreted according to their ordinary meaning in the technical field, unless explicitly defined otherwise herein. All references to "a/an/the portion, element, apparatus, component, arrangement, device, means, etc." are to be interpreted openly as referring to at least one instance of the portion, element, apparatus, component, arrangement, device, means, etc., unless explicitly stated otherwise. Further features of, and advantages with, the teachings of the present disclosure will become apparent when studying the appended claims and the following description. The skilled person realizes that different features of the present disclosure may be combined to create embodiments other than those described in the following, without departing from the scope of the present disclosure.

### BRIEF DESCRIPTION OF THE DRAWINGS

With reference to the appended drawings, below follows a more detailed description of embodiments of the invention cited as examples.

In the drawings:
Fig. 1 illustrates a vehicle according to at least one exemplary embodiment of the present disclosure.
Fig. 2 illustrates in a perspective view a vehicle suspension comprising two leaf springs in connection with which the teachings of the present disclosure may be implemented.
Fig. 3 schematically illustrates a side or cross-sectional view of a leaf spring arrangement according to at least one exemplary embodiment, when mounted as part of a vehicle suspension.
Figs. 4a-4c illustrate a technical effect of implementing the teachings of the present disclosure.
Fig. 5 schematically illustrates a side or cross-sectional view of a leaf spring arrangement according to at least one other exemplary embodiment, when mounted as part of a vehicle suspension.
Fig. 6 is a schematic comparison between the leaf spring in Fig. 5 and a conventional leaf spring.
Fig. 7 shows an exemplary connection between a leaf spring and an axle.

### DETAILED DESCRIPTION OF EXAMPLE EMBODIMENTS OF THE INVENTION

The general inventive concept will now be described more fully hereinafter with reference to the accompanying drawings, in which certain aspects are shown. The general inventive concept may, however, be embodied in many different forms and should not be construed as limited to the embodiments and aspects set forth herein; rather, the embodiments are provided by way of example so that this disclosure will be thorough and complete, and will fully convey the scope to those skilled in the art. Accordingly, it is to be understood that the present general inventive concept is not limited to the embodiments described herein and illustrated in the drawings; rather, the skilled person will recognize that many changes and modifications may be made within the scope of the appended claims. Like reference numerals refer to like elements throughout the description.

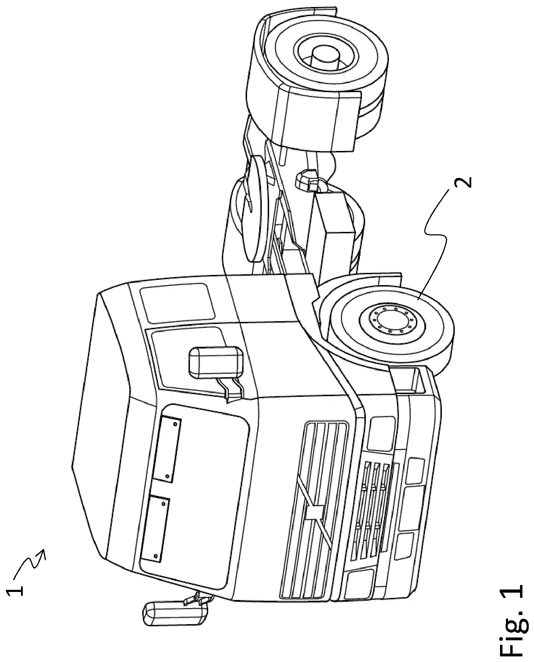

Fig. 1 illustrates a vehicle 1 according to at least one exemplary embodiment of the present disclosure. The exemplary illustration in Fig. 1 shows a heavy-duty vehicle 1. More specifically Fig. 1 shows a vehicle in the form of a tractor unit for towing a trailer unit (not shown), which together may make up a semitrailer vehicle. However, the teachings of the present disclosure are applicable to other types of vehicles as well. For instance, the vehicle may be a different type of vehicle for cargo transport, such as a truck, or a truck with a dolly unit arranged to tow a trailer unit, etc. Other exemplary vehicles include buses, construction equipment, and even passenger cars. The vehicle 1 may be operated by a driver or it may be an autonomous vehicle.

The illustrated vehicle 1 is supported on wheels 2, some of which are driven wheels. The front wheels 2 may suitably be steered wheels. The wheels 2, such as the wheels at the front axle, may be associated with a vehicle suspension in accordance with the teachings of this disclosure. Such a vehicle suspension may in its turn comprise a leaf spring arrangement in accordance with the teachings of this disclosure.

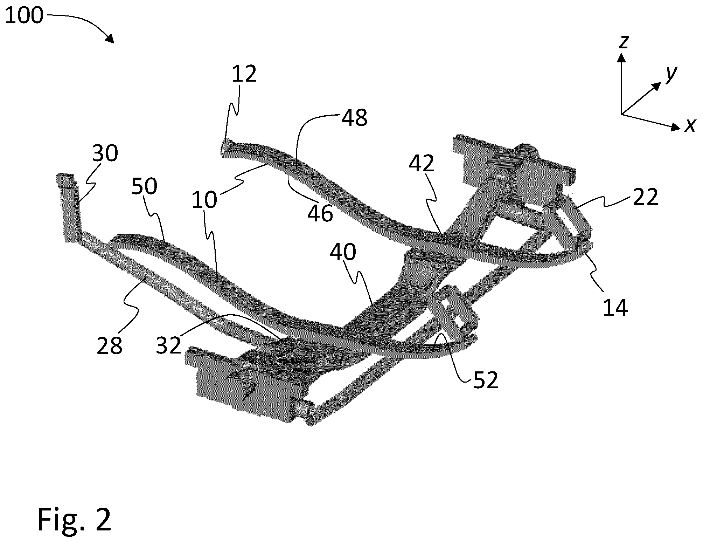

Fig. 2 illustrates in a perspective view a vehicle suspension comprising two leaf springs in connection with which the teachings of the present disclosure may be implemented.

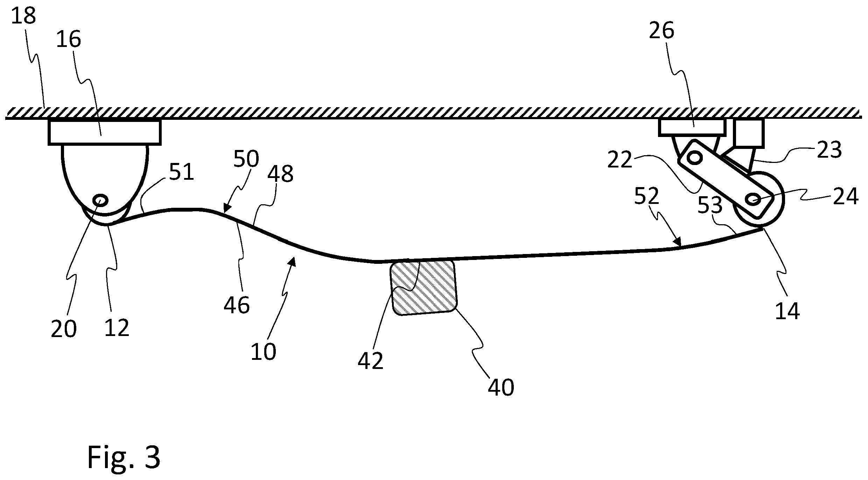

Fig. 3 schematically illustrates a side or cross-sectional view of a leaf spring arrangement according to at least one exemplary embodiment, when mounted as part of a vehicle suspension. The illustration in Fig. 3 may, for instance, show one of the leaf springs 10 in the vehicle suspension 100 of Fig. 2.

With reference to both Fig. 2 and Fig. 3, each leaf spring 10 has a first end 12 and a second end 14. The first end 12 is connected to a first bracket 16 configured to be attached rigidly to a vehicle frame 18 at a first frame position (see Fig. 3). More specifically, the first end 12 of the leaf spring 10 comprises a first end eye 20 for engaging with the first bracket 16. The second end 14 of each leaf spring 10 is connected to a shackle 22. More specifically, the second end 14 comprises a second end eye 24 for engaging with the shackle 22. The shackle 22 is pivotally connected to a second bracket 26 configured to be attached rigidly to the vehicle frame 18 at a second frame position (see Fig. 3). The connection between the second end 14 of the leaf spring 10 and the shackle 22 is made in order to compensate for length changes of the leaf spring 10 in response to brake torque loads on the leaf spring 10. Fig. 2 also shows a drag link 28 which interconnects a pitman arm 30 with a steering arm 32 for controlling a steerable wheel (these components do not form part of the vehicle suspension 100 as such). It can therefore be understood that, in this example, the first end 12 is intended to be arranged forwardly of the second end 14. The first end 12 of each leaf spring 10 may thus be regarded as a front end 12 of the leaf spring 10, while the second end 14 may be regarded as a rear end of the leaf spring 10.

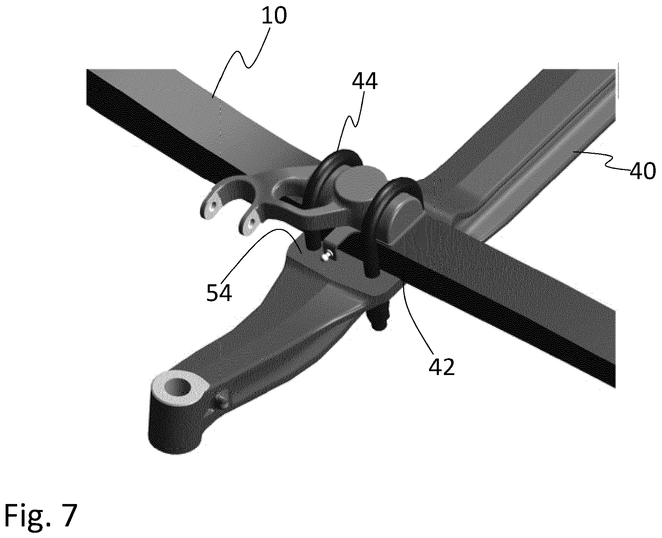

As can be seen in Fig. 2, the vehicle suspension 100 further comprises a rigid axle 40 extending transversely of the vehicle frame 18, which axle 40 is mounted to the two leaf springs 10 at an axle attachment portion 42 of the respective leaf spring 10. As shown in the example in Fig. 7, each leaf spring 10 may suitably be fastened/clamped (at each axle attachment portion 42) to the axle 40 by means of brackets or similar. For instance, a pair of U-shaped dowel pins 44 may be placed over the leaf spring 10 to hold down the leaf spring 10, wherein the dowel pins 44 may further extend through bores in the axle 40 and be tightened. Continuing with Figs. 2, 3 and 7, the axle attachment portion 42 may suitably be the thickest portion of the leaf spring 10. Furthermore, at the axle attachment portion 42 the lower side 46 of the leaf spring 10 may suitably be substantially flat/planar in order to mate with a similarly flat/planar plate portion 54 (see Fig. 7) of the axle 40.

With reference to Figs. 2 and 3, the leaf spring 10 comprises a lower surface 46 configured to face downwardly towards the ground when used in a vehicle suspension. As illustrated, the lower surface 46 may face and be in contact with the axle 40. The leaf spring 10 comprises an upper surface 48 which is located opposite to the lower surface 46 and which is configured to face upwardly when used in a vehicle suspension. As illustrated, the upper surface 48 may face away from the axle 40. The upper surface 48 as well as the lower surface 46 extend longitudinally from the first end 12 to the second end 14 of the leaf spring 10. The axle attachment portion 42 of the leaf spring 10 is located between the first end 12 and the second end 14. The axle attachment portion 42 is configured to be attached to the axle 40 such that the longitudinal extension of the upper surface 48 and lower surface 46 of the leaf spring 10 is directed transversely to main direction of extension of the axle 40.

In Fig. 2 a Cartesian coordinate system (*x, y, z*) is illustrated. The x-axis corresponds to the longitudinal direction of the vehicle. The x-axis may also be referred to as the roll axis. The longitudinal extensions of the leaf springs 10 in Fig. 2 are substantially parallel to the roll axis. The *y*-axis may also be referred to as the pitch axis. The longitudinal extension (i.e. the main direction of extension) of the axle 40 is substantially parallel with the pitch axis. The z-axis may also be referred to as the yaw axis. The upper surface 48 of the leaf spring 10 is thus intended to be separated from the lower surface 46 of the leaf spring 10 along the z-axis (more specifically along a direction parallel to the z-axis).

As best seen in Fig. 3, the leaf spring 10 comprises a first upwardly facing convex portion 50 formed between the first end 12 of the leaf spring 10 and the axle attachment portion 42 of the leaf spring 10. The first upwardly facing convex portion 50 can be seen to bulge upwardly (i.e. bulge upwardly in a direction parallel with the z-axis). As can be seen in Fig. 3, the leaf spring 10 extends upwardly from the first end 12. This is illustrated by an upwardly extending portion 51 which may form part of the first upwardly facing convex portion 50. The leaf spring 10 also comprises a second upwardly facing concave portion 52 formed between the axle attachment portion 42 and the second end 14. This second upwardly facing concave portion 52 can be seen as a downwardly projecting bulge, i.e. bulging in the opposite direction compared to the first upwardly facing convex portion 50 in relation to the z-axis. As can be seen in Fig. 3, the leaf spring 10 extends downwardly from the shackle 22. This is illustrated by a downwardly extending portion 53 which may form part of the second upwardly facing concave portion 52. As can also be seen in Fig. 3, since the leaf spring 10 extends downwardly from the shackle 22, it also extends downwardly from its second end 14.

Fig. 3 also illustrates a stop member 23. Although the stop member is not illustrated in the vehicle suspension 100 in Fig. 2, it should be understood that such a stop member 23 may, in accordance with the present disclosure, form part of a leaf spring arrangement which comprises at least one of the leaf springs 10 and associated shackle 22 in Fig. 2 as well as the first bracket 16, and the second bracket 26. The stop member 23 restricts the pivoting movement of the shackle 22.

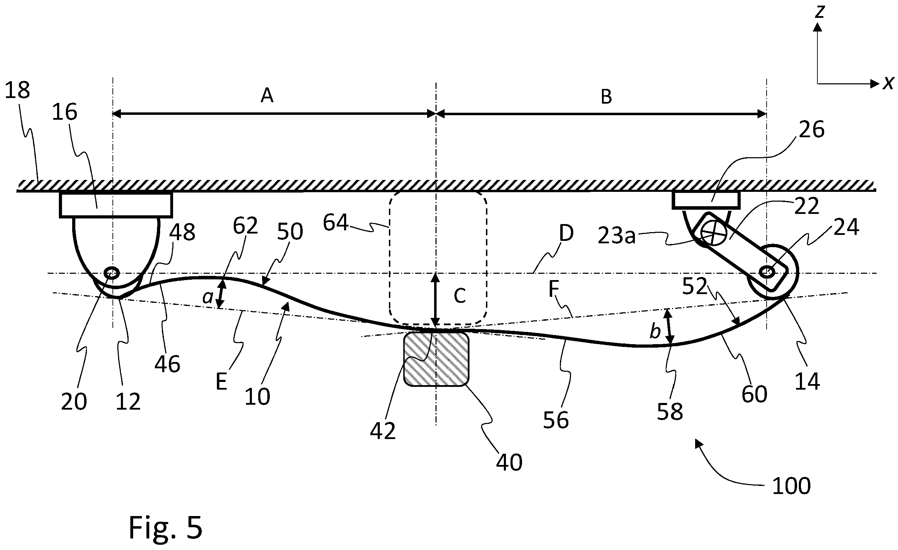

Thus, in a general sense, the present disclosure relates to a leaf spring arrangement for use in a vehicle suspension 100, comprising:
- a leaf spring 10 which comprises:
   - a lower surface 46 configured to face downwardly towards the ground,
   - an upper surface 48 which is located opposite to the lower surface 46 and which is configured to face upwardly,
   - a first end 12,
   - a second end 14,
   wherein the upper surface 48 and the lower surface 46 extend longitudinally from the first end 12 to the second end 14,
   - a first bracket 16 configured to be attached rigidly to a vehicle frame 18 at a first frame position,
   - a second bracket 26 configured to be attached rigidly to the vehicle frame 18 at a second frame position,
   - a shackle 22 pivotally connected to the second bracket 26,
   - a stop member 23, 23a (stop member 23a is illustrated in the example in Fig. 5) restricting the pivoting movement of the shackle 22,

wherein the first end 12 of the leaf spring 10 is connected to the first bracket 16,
wherein the second end 14 of the leaf spring 10 is connected to the shackle 22 in order to compensate for length changes of the leaf spring 10 in response to brake torque loads on the leaf spring 10,
wherein the leaf spring 10 extends downwardly from the shackle 22, and
wherein the leaf spring 10 extends upwardly from its first end 12.

By having one end of the leaf spring 10 extending upwardly from its first end 12, and having the other end 14 of the leaf spring 10 extending downwardly from the shackle 22, which is connected to the second bracket 26, and restricting the pivoting movement of the shackle 22 by means of the stop member 23, a leaf spring arrangement is provided which can take up brake torque loads without overstressing the leaf spring 10.

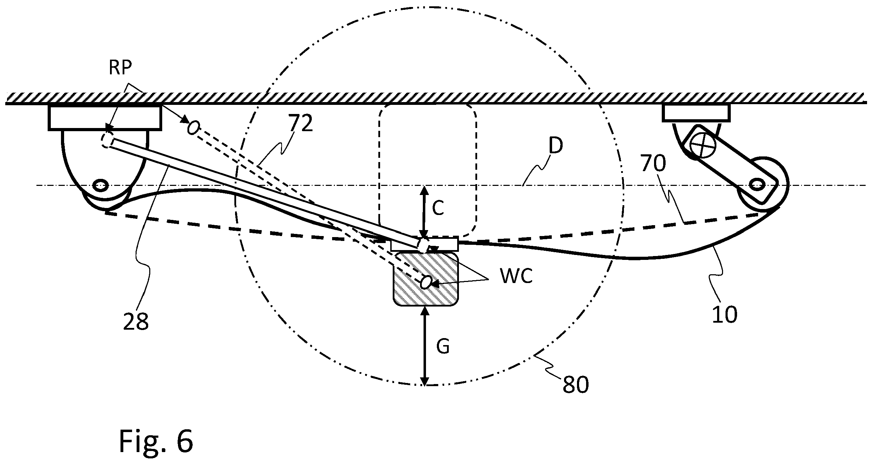

As will later be discussed in connection with Fig. 6, the combination of a first upwardly facing convex portion 50 and a second upwardly facing concave portion 52 illustrated in Fig. 3 allows for the wind-up centre to be at a higher level (as seen in relation to the z-axis) compared to known leaf springs, even if the distance to the datum line is increased. This allows for improved handling properties.

From the previous discussion, as well as from the drawings, it can be understood that according to at least some exemplary embodiments, the longitudinal extension of the leaf spring 10 may follow an S-shaped path. In more general terms, in accordance with at least some exemplary embodiments, the leaf spring 10 is S-shaped. When subjected to braking loads a horizontal force component may extend/stretch the S-shape as the second end 14 is moved backwards upon such braking.

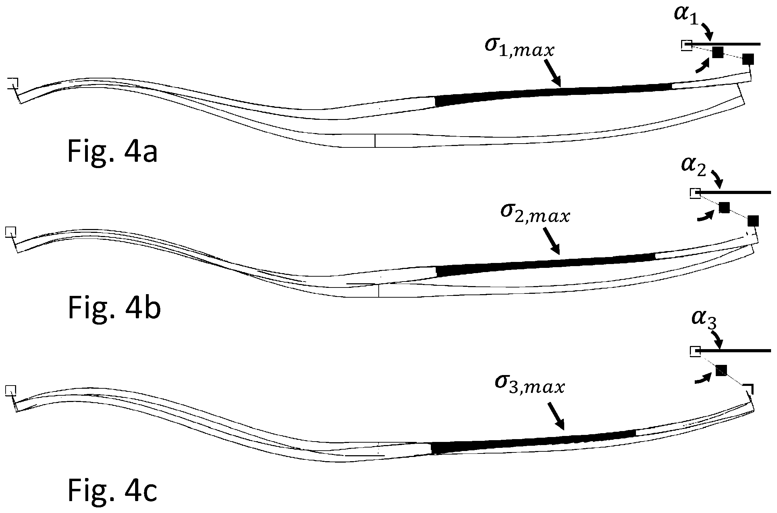

As already understood from previous explanations in this disclosure, the stop member 23 illustrated in Fig. 3 is just one example of various possible configurations of a stop member. The stop member may be any suitable device or component that has the capability to restrict the pivoting movement of the shackle 22, i.e. so that the shackle 22 cannot pivot as much as it would without the stop member. The main purpose of the stop member 23, or any other configuration of a stop member, is to limit the stresses that are induced in the leaf spring 10, and this is done by restricting the pivoting movement of shackle 22. This will now be discussed in more detail in connection with Figs. 4a-4c.

Figs. 4a-4c illustrate a technical effect of implementing the teachings of the present disclosure. In each one of Figs. 4a-4c, the leaf spring is illustrated in the two different states. The lower illustration is the same for each one of Figs. 4a-4c and it represents the shape of the leaf spring at static axle load, e.g. when the vehicle is at a standstill/parked. The upper illustration is different in each one of Figs. 4a-4c and represents the changed shape of the leaf spring due to brake torque loads. The black area in each one of the upper illustrations is the area where the peak stresses occur.

Fig. 4a illustrates a scenario in which there is no stop member that restricts the shackle. When the leaf spring is subjected to a brake torque load, the shackle pivots unrestrictedly and makes a relatively large "pendulum swing". The shackle has in Fig. 4a been swung to a position in which it forms a small angle *α₁* relative to the vehicle frame. This results in a high peak stress *σ_{1,max}* in an area between the axle attachment portion and the second end of the leaf spring.

Fig. 4b illustrates the effect of using a stop member in accordance with the present disclosure. The shackle is restricted to a smaller swing. The stop member restricts the shackle from pivoting beyond the position where it forms an angle *α₂* relative to the vehicle frame, wherein *α₂* is greater than *α₁*. For the same brake torque load as in Fig. 4a, the resulting peak stress *σ_{2,max}* will be lower in Fig. 4b because of the restricted swing. For example, the peak stress *σ_{2,max}* in the corresponding area of the leaf spring in Fig. 4b may, because of the stop member, have now been reduced to approximately 85% compared to the peak stress *σ_{1,max}* without the stop member in Fig. 4a.

In Fig. 4c, the allowed swing is even smaller, i.e. maintaining an even larger angle *α₃*, wherein *α₃ > α₂ > α₁.* This will further reduce the peak stress. For instance, the peak stress *σ_{3,max}* in Fig. 4c may, for the same brake torque load, be approximately 75% compared to the peak stress *σ_{1,max}* in Fig. 4a. As will be readily understood, providing a stop member, and thereby limiting the peak stress, has a large effect on fatigue life and decreases the risk for the threshold values being exceeded. Thus, the effective lifetime of the leaf spring can be extended. The specific shape of the leaf spring and the rotational stop angle may be tuned to appropriately balance the limitation of the peak stresses with the handling characteristics of the leaf spring.

Fig. 5 schematically illustrates a side or cross-sectional view of a leaf spring arrangement according to at least one other exemplary embodiment, when mounted as part of a vehicle suspension. As shown in Fig. 5, the second upwardly facing concave portion 52 is formed by a first subportion 56, which extends downwardly from the axle attachment portion 42 to a lowest point 58 of the second upwardly facing concave portion 52, and a second subportion 60 which extends upwardly from said lowest point 58 to the second end 14. As can be seen in Fig. 5, the lowest point 58 represents a global minimum of the leaf spring 10. In contrast, there is a highest point 62, i.e. a global maximum of the leaf spring 10, formed by the first upwardly facing convex portion 50.

In contrast to Fig. 5, in the previously discussed embodiment in Fig. 3, the second upwardly facing concave portion 52 of the leaf spring 10 does not have such a first subportion which extends downwardly from the axle attachment portion 42. Rather, in Fig. 3, the second upwardly facing concave portion 52 extends upwardly from the axle attachment portion 42 to the second end 14. Furthermore, as indicated in Fig. 3, the axle 40 may be slightly tilted relative to the ground and the vehicle frame 18. In particular, the axle 40 may be slightly tilted relative to the pitch axis, such that the axle attachment portion 42 is inclined upwardly in a direction towards the second end 14. In contrast, in Fig. 5, the axle 40 is not tilted, and the axle attachment portion 42 is substantially parallel with the vehicle frame 18.

Continuing with Fig. 5, it can be seen that the second subportion 60 may have a steeper slope from said lowest point 58 to the second end 14 compared to the slope of the first subportion 56 from the lowest point 58 to the axle attachment portion 42. Hereby, a shorter offset is obtainable between the second end eye 24 and the vehicle frame 18. This in turn allows the shackle 22, which is configured to engage the second end eye 24, to be made smaller and therefore the second bracket 26 to which the shackle 22 is attachable can be made lighter. Furthermore, the extension of the second subportion 60 may form a curved path from said lowest point 58 to the second end 14, wherein the smallest radius of curvature of the second subportion 60 is smaller than any radius of curvature of the first subportion 56.

In the following certain dimensions, separating distances and relationships, will be explained in connection with the exemplary embodiment of Fig. 5. It should however be understood that these dimensions, separating distances and relationships are implementable for other embodiments as well, in particular for the previously discussed embodiment of Fig. 3.

Thus, with reference to the example in Fig. 5, as mentioned previously, the first end 12 comprises a first end eye 20 and the second end 14 comprises a second end eye 24. The shortest distance between the first end eye 20 and the second end eye 24 defines a geometrical datum line D. The datum line D is thus understood to extend substantially in parallel with the *x*-axis (roll axis). An intermediate point on the datum line D is separated from the centre of the axle attachment portion by a distance C, which is the shortest distance between the centre of the axle attachment portion 42 and the datum line D. The first end eye 20 is separated from the intermediate point by a predetermined first length A along said datum line D. The second end eye 24 is separated from the intermediate point by a predetermined second length B along said datum line D.

The relationship between said distance C, said predetermined first length A, and said predetermined second length B may suitably be C > (A+B)/X where X is 80, suitably 30, more suitably 15.

Furthermore, in the example in Fig. 5 there is indicated a first straight imaginary geometrical line E drawn between the end points of the first upwardly facing convex portion 50, from the first end 12 to the axle attachment portion 42. Perpendicularly to this first straight imaginary geometrical line E the largest distance a between the first straight imaginary geometrical line E and the first upwardly facing convex portion 50 may be defined as a > A/Y where Y is 80, suitably 30, more suitably 20. The largest distance a extends to a point on the first upwardly facing convex portion 50 which may coincide with the previously mentioned highest point 62 (global maximum).

Furthermore, in the example of in Fig. 5 there is also indicated a second straight imaginary geometrical line F drawn between the end points of the second upwardly facing concave portion 58, from the second end 14 to the axle attachment portion 42. Perpendicularly to this second straight imaginary geometrical line F the largest distance b between the second straight imaginary geometrical line F and the second upwardly facing concave portion 52 may be defined as *b* > B/Z wherein Z is 80, suitably 30, more suitably 20. The largest distance *b* extends to a point on the second upwardly facing concave portion 52 which may coincide with the previously mentioned lowest point 58 (global minimum).

Fig. 5 also indicates that the vehicle suspension 100 may optionally include an air spring 64, such as an air bellow extending between the leaf spring 10 and the vehicle frame 18. It should be understood that on the one hand, it may be desirable to reduce the spacing between the datum line D and the vehicle frame 18 as that will allow a reduction of the size, and thus the weight, of the first and second brackets 16, 26 and reduce reaction forces in the vehicle frame 18. On the one hand, to increase the packaging space for the air spring 64, it may be desirable to increase the distance C. Increasing the distance C also allows for increased wheel motion and improved comfort.

Instead of having the stop member 23 of Fig. 3, against which the shackle 22 can impinge in its swing, the leaf spring arrangement in Fig. 5 is illustrated as having a torsional stop member 23a mounted to the shackle 22 for restricting the pivoting motion of the shackle 22. It should, however, be understood that in both exemplary embodiments, you may implement either one of the exemplified stop members 23, 23a, or any other suitable configuration of a stop member that restricts the swing of the shackle 22. Regardless of the specific selection of stop member, it may suitably be configured to prevent the shackle 22 from reaching an instability position in which the shackle 22 would lose its bearing capacity with respect to the leaf spring 10, as has been previously discussed in this disclosure.

Furthermore, either one of the stop members 23, 23a, or any other suitable stop member, may be configured to prevent the shackle 22 from pivoting beyond a predefined angle, wherein, when the shackle is pivoted to said predefined angle and thereby extends the leaf spring, the second upwardly facing concave portion of the leaf spring maintains an upwardly facing concave shape although presenting a larger radius of curvature than its original upwardly facing concave shape. This can for example be seen in the illustrations in Fig. 4b and 4c.

Fig. 6 is a schematic comparison between the leaf spring 10 in Fig. 5 and a conventional leaf spring 70 (illustrates with dashed line). Fig. 6 also indicates the respective wind-up centre, WC, for the two leaf springs 10, 70, and the respective Ross point, RP, for the two leaf springs 10, 70. The wind-up centre, WC, is an imaginary point standing relatively still during a braking manoeuvre. The Ross point, RP, is an imaginary point in space about which a leaf spring under vertical load will arc. The imaginary line between the Ross point and the wind-up centre is referred to as the Ross line. The angle between the Ross line and the datum line D is referred to as the Ross angle.

Good handling characteristics are generally reached when the drag link 28 is connected between the Ross point, RP, and the wind-up centre, WC, i.e. the Ross line should suitably match the extension of the drag link. It is therefore desirable to have the steering gear with the pitman arm at the Ross point, RP, and the steering arm at the wind-up centre, WC.

With the conventional U-shaped leaf blade 70 it is difficult to position the steering gear (close to the Ross point, RP) and the steering arm (close to the wind-up centre, WC) because of packing limitations. Even if you succeed in positioning the conventional U-shaped leaf blade 70 with respect to the Ross point, RP, and the wind-up centre, WC, the shorter Ross line and larger Ross angle (cf. indicated dashed drag link/Ross line 72) will have negative impact on handling characteristics compared to the handling characteristics of the leaf spring 10 (solid line) of the present disclosure.

As can be seen in Fig. 6, the shape of the leaf spring 10 of the present disclosure results in a longer Ross line and a smaller Ross angle, thereby making the steering support less sensitive (smaller angular motion during vertical spring travel). Furthermore, the position of the wind-up centre, WC, is close to the leaf spring centre which makes it possible to use the steering arm geometry with clearance to the axle. This makes it possible to reduce axle offset with good axle ground clearance (i.e. corresponding to the vertical distance G to the tire circle 80 indicated by the dash-dotted circle in Fig. 6). The shape of the leaf spring 10 also creates good and stable understeering level together with reduced low level unwanted steering effects like bump and brake steer.

## Claims

1. A leaf spring arrangement (10, 16, 22, 23, 23a, 26), for use in a vehicle suspension (100), comprising:
- a leaf spring (10) which comprises:
• a lower surface (46) configured to face downwardly towards the ground,
• an upper surface (48) which is located opposite to the lower surface and which is configured to face upwardly,
• a first end (12),
• a second end (14),
wherein the upper surface and the lower surface extend longitudinally from the first end to the second end,
- a first bracket (16) configured to be attached rigidly to a vehicle frame (18) at a first frame position,
- a second bracket (26) configured to be attached rigidly to the vehicle frame at a second frame position,
- a shackle (22) pivotally connected to the second bracket, and
- a stop member (23, 23a) restricting the pivoting movement of the shackle,
wherein the stop member limits the extension of the leaf spring,
wherein the first end of the leaf spring is connected to the first bracket,
wherein the second end of the leaf spring is connected to the shackle in order to compensate for length changes of the leaf spring in response to brake torque loads on the leaf spring, wherein the leaf spring arrangement at least partly absorbs brake torque loads without overstressing the leaf spring due to the stop member limiting the extension of the leaf spring, wherein the leaf spring extends downwardly (53) from the shackle, and
wherein the leaf spring extends upwardly (51) from its first end.

2. The leaf spring arrangement (10, 16, 22, 23, 23a, 26) according to claim 1, wherein the stop member (23, 23a) is configured to prevent the shackle (22) from reaching an instability position in which the shackle would lose its bearing capacity with respect to the leaf spring (10).

3. The leaf spring arrangement (10, 16, 22, 23, 23a, 26) according to any one of claims 1-2, wherein the leaf spring (10) comprises:
- an axle attachment portion (42) located between the first end (12) and the second end (14), the axle attachment portion being configured to be attached to an axle (40) such that the longitudinal extension of the upper and lower surface of the leaf spring is directed transversely to the axle,
- a first upwardly facing convex portion (50) formed between the first end and the axle attachment portion, and
- a second upwardly facing concave portion (52) formed between the axle attachment portion and the second end.

4. The leaf spring arrangement (10, 16, 22, 23, 23a, 26) according to claim 3, wherein the stop member (23, 23a) is configured to prevent the shackle (22) from pivoting beyond a predefined angle (*α₂,α₃*)*,* wherein, when the shackle is pivoted to said predefined angle and thereby extends the leaf spring (10), the second upwardly facing concave portion (52) of the leaf spring maintains an upwardly facing concave shape although presenting a larger radius of curvature than its original upwardly facing concave shape.

5. The leaf spring arrangement (10, 16, 22, 23, 23a, 26) according to any one of claims 3-4, wherein the axle attachment portion (42) is the thickest portion of the leaf spring (10).

6. The leaf spring arrangement (10, 16, 22, 23, 23a, 26) according to any one of claims 3-5, wherein the second upwardly facing concave portion (52) extends upwardly from the axle attachment portion (42) to the second end (14).

7. The leaf spring arrangement (10, 16, 22, 23, 23a, 26) according to any one of claims 3-5, wherein the second upwardly facing concave portion (52) is formed by:
- a first subportion (56), which extends downwardly from the axle attachment portion (42) to a lowest point (58) of the second upwardly facing concave portion, and
- a second subportion (60) which extends upwardly from said lowest point (58) to the second end (14).

8. The leaf spring arrangement (10, 16, 22, 23, 23a, 26) according to claim 7, wherein the second subportion (60) has a steeper slope from said lowest point (58) to the second end (14) compared to the slope of the first subportion (56) from the lowest point (58) to the axle attachment portion (42).

9. The leaf spring arrangement (10, 16, 22, 23, 23a, 26) according to any one of claims 7-8, wherein the extension of the second subportion (60) forms a curved path from said lowest point (58) to the second end (14), wherein the smallest radius of curvature of the second subportion is smaller than any radius of curvature of the first subportion (56).

10. The leaf spring arrangement (10, 16, 22, 23, 23a, 26) according to any one of claims 3-9, wherein the first end (12) comprises a first end eye (20) and the second end (14) comprises a second end eye (24), wherein the shortest distance between said first and second end eyes defines a geometrical datum line (D), wherein
- an intermediate point on the datum line is separated from the centre of the axle attachment portion (42) by a distance C, which is the shortest distance between the centre of the axle attachment portion and the datum line (D),
- the first end eye (20) is separated from said intermediate point by a predetermined first length A along said datum line,
- the second end eye (24) is separated from said intermediate point by a predetermined second length B along said datum line (D).

11. The leaf spring arrangement (10, 16, 22, 23, 23a, 26) according to claim 10, wherein the relationship between said distance C, said predetermined first length A, and said predetermined second length B is:
C > (A+B)/X where X is 80, 30, or 15.

12. The leaf spring arrangement (10, 16, 22, 23, 23a, 26) according to any one of claims 10-11, wherein a first straight imaginary geometrical line (E) is drawable between the end points of the first upwardly facing convex portion (50), from the first end (12) to the axle attachment portion (42), wherein perpendicularly to the first straight imaginary geometrical line the largest distance a between the first straight imaginary geometrical line and the first upwardly facing convex portion (50) is defined as:
a > A/Y where Y is 80, 30, or 20.

13. The leaf spring arrangement (10, 16, 22, 23, 23a, 26) according to any one of claims 10-12, wherein a second straight imaginary geometrical line (F) is drawable between the end points of the second upwardly facing concave portion (52), from the second end (14) to the axle attachment portion (42), wherein perpendicularly to the second straight imaginary geometrical line (F) the largest distance b between the second straight imaginary geometrical line (F) and the second upwardly facing concave portion is defined as *b* > B/Z wherein Z is 80, 30, or 20.

14. A vehicle suspension (100) comprising a leaf spring arrangement (10, 16, 22, 23, 23a, 26) according to any one of claims 1-13, wherein said leaf spring arrangement is a first leaf spring arrangement, the vehicle suspension further comprising:
- a second leaf spring arrangement according to any one of claims 1-13, and
- an axle (40) configured to extend transversely of the vehicle frame (18), which axle is mounted to the two leaf springs of the respective leaf spring arrangements at said axle attachment portions (42).

15. A vehicle (1) comprising a leaf spring arrangement (10, 16, 22, 23, 23a, 26) according to any one of claims 1-13 or a vehicle suspension (100) according to claim 14.

## Patentansprüche

1. Blattfederanordnung (10, 16, 22, 23, 23a, 26) zur Verwendung in einer Fahrzeugaufhängung (100), umfassend:
- eine Blattfeder (10), die Folgendes umfasst:
• eine untere Fläche (46), die dazu konfiguriert ist, nach unten in Richtung des Bodens gewandt zu sein,
• eine obere Fläche (48), die gegenüber der unteren Fläche angeordnet ist und die dazu konfiguriert ist, nach oben gewandt zu sein,
• ein erstes Ende (12),
• ein zweites Ende (14),
wobei sich die obere Fläche und die unter Fläche längs von dem ersten Ende zu dem zweiten Ende erstrecken,
- eine erste Halterung (16), die dazu konfiguriert ist, starr an einem Fahrzeugrahmen (18) in einer ersten Rahmenposition angebracht zu werden,
- eine zweite Halterung (26), die dazu konfiguriert ist, starr an dem Fahrzeugrahmen in einer zweiten Rahmenposition angebracht zu werden,
- einen Bügel (22), der schwenkbar mit der zweiten Halterung verbunden ist, und
- ein Anschlagelement (23, 23a), das die Schwenkbewegung des Bügels einschränkt,
wobei das Anschlagelement die Ausdehnung der Blattfeder begrenzt,
wobei das erste Ende der Blattfeder mit der ersten Halterung verbunden ist,
wobei das zweite Ende der Blattfeder mit dem Bügel verbunden ist, um Längenänderungen der Blattfeder als Reaktion auf Bremsdrehmomentlasten der Blattfeder auszugleichen, wobei die Blattfederanordnung Bremsdrehmomentlasten mindestens teilweise aufnimmt, ohne die Blattfeder zu überlasten, da das Anschlagelement die Ausdehnung der Blattfeder begrenzt, wobei sich die Blattfeder von dem Bügel nach unten (53) erstreckt und wobei sich die Blattfeder von ihrem ersten Ende nach oben (51) erstreckt.

2. Blattfederanordnung (10, 16, 22, 23, 23a, 26) nach Anspruch 1, wobei das Anschlagelement (23, 23a) dazu konfiguriert ist, zu verhindern, dass der Bügel (22) eine Instabilitätsposition erreicht, in welcher der Bügel seine Tragfähigkeit in Bezug auf die Blattfeder (10) verlieren würde.

3. Blattfederanordnung (10, 16, 22, 23, 23a, 26) nach einem der Ansprüche 1-2, wobei die Blattfeder (10) Folgendes umfasst:
- einen Achsenanbringungsabschnitt (42), der sich zwischen dem ersten Ende (12) und dem zweiten Ende (14) befindet, wobei der Achsenanbringungsabschnitt dazu konfiguriert ist, derart an einer Achse (40) angebracht zu werden, dass die Längserstreckung der oberen und unteren Fläche der Blattfeder quer zu der Achse geführt wird,
- einen ersten nach oben gewandten konvexen Abschnitt (50), der zwischen dem ersten Ende und dem Achsenanbringungsabschnitt gebildet ist, und
- einen zweiten nach oben gewandten konkaven Abschnitt (52), der zwischen dem Achsenanbringungsabschnitt und dem zweiten Ende gebildet ist.

4. Blattfederanordnung (10, 16, 22, 23, 23a, 26) nach Anspruch 3, wobei das Anschlagelement (23, 23a) dazu konfiguriert ist, zu verhindern, dass der Bügel (22) über einen vordefinierten Winkel (α2, α3) hinaus schwenkt, wobei, wenn der Bügel zu dem vordefinierten Winkel geschwenkt wird und dadurch die Blattfeder (10) ausdehnt, der zweite nach oben gewandte konkave Abschnitt (52) der Blattfeder eine nach oben gewandte konkave Form beibehält, wenngleich er einen größeren Krümmungsradius als seine ursprüngliche nach oben gewandte konkave Form an den Tag legt.

5. Blattfederanordnung (10, 16, 22, 23, 23a, 26) nach einem der Ansprüche 3-4, wobei der Achsenanbringungsabschnitt (42) der dickste Abschnitt der Blattfeder (10) ist.

6. Blattfederanordnung (10, 16, 22, 23, 23a, 26) nach einem der Ansprüche 3-5, wobei sich der zweite nach oben gewandte konkave Abschnitt (52) von dem Achsenanbringungsabschnitt (42) nach oben zu dem zweiten Ende (14) erstreckt.

7. Blattfederanordnung (10, 16, 22, 23, 23a, 26) nach einem der Ansprüche 3-5, wobei der zweite nach oben gewandte konkave Abschnitt (52) durch Folgendes gebildet ist:
- einen ersten Teilabschnitt (56), der sich von dem Achsenanbringungsabschnitt (42) nach unten zu einem untersten Punkt (58) des zweiten nach oben gewandten konkaven Abschnitts erstreckt, und
- einen zweiten Teilabschnitt (60), der sich von dem untersten Punkt (58) nach oben zu dem zweiten Ende (14) erstreckt.

8. Blattfederanordnung (10, 16, 22, 23, 23a, 26) nach Anspruch 7, wobei der zweite Teilabschnitt (60) im Vergleich zu der Neigung des ersten Teilabschnitts (56) von dem untersten Punkt (58) zu dem Achsenanbringungsabschnitt (42) eine steilere Neigung von dem untersten Punkt (58) zu dem zweiten Ende (14) aufweist.

9. Blattfederanordnung (10, 16, 22, 23, 23a, 26) nach einem der Ansprüche 7-8, wobei die Ausdehnung des zweiten Teilabschnitts (60) einen gekrümmten Pfad von dem untersten Punkt (58) zu dem zweiten Ende (14) bildet, wobei der kleinste Krümmungsradius des zweiten Teilabschnitts kleiner als ein jeglicher Krümmungsradius des ersten Teilabschnitts (56) ist.

10. Blattfederanordnung (10, 16, 22, 23, 23a, 26) nach einem der Ansprüche 3-9, wobei das erste Ende (12) eine Öse (20) des ersten Endes umfasst und das zweite Ende (14) eine Öse (24) des zweiten Endes umfasst, wobei die kürzeste Entfernung zwischen der Öse des ersten und zweiten Endes eine geometrische Bezugslinie (D) definiert, wobei
- ein Zwischenpunkt auf der Bezugslinie durch eine Entfernung C von dem Mittelpunkt des Achsenanbringungsabschnitts (42) getrennt ist, bei der es sich um die kürzeste Entfernung zwischen dem Mittelpunkt des Achsenanbringungsabschnitts und der Bezugslinie (D) handelt,
- die Öse (20) des ersten Endes durch eine vorbestimmte erste Länge A entlang der Bezugslinie von dem Zwischenpunkt getrennt ist,
- die Öse (24) des zweiten Endes durch eine vorbestimmte zweite Länge B entlang der Bezugslinie (D) von dem Zwischenpunkt getrennt ist.

11. Blattfederanordnung (10, 16, 22, 23, 23a, 26) nach Anspruch 10, wobei die Beziehung zwischen der Entfernung C, der vorbestimmten ersten Länge A und der vorbestimmten zweiten Länge B wie folgt lautet:
C > (A+B)/X, wobei X 80, 30 oder 15 ist.

12. Blattfederanordnung (10, 16, 22, 23, 23a, 26) nach einem der Ansprüche 10-11, wobei eine erste gerade imaginäre geometrische Linie (E) zwischen den Endpunkten des ersten nach oben gewandten konvexen Abschnitts (50) von dem ersten Ende (12) zu dem Achsenanbringungsabschnitt (42) zeichenbar ist, wobei die größte Entfernung a zwischen der ersten geraden imaginären geometrischen Linie und dem ersten nach oben gewandten konvexen Abschnitt (50) senkrecht zu der ersten geraden imaginären geometrischen Linie wie folgt definiert ist:
a > A/Y, wobei Y 80, 30 oder 20 ist.

13. Blattfederanordnung (10, 16, 22, 23, 23a, 26) nach einem der Ansprüche 10-12, wobei eine zweite gerade imaginäre geometrische Linie (F) zwischen den Endpunkten des zweiten nach oben gewandten konkaven Abschnitts (52) von dem zweiten Ende (14) zu dem Achsenanbringungsabschnitt (42) zeichenbar ist, wobei die größte Entfernung b zwischen der zweiten geraden imaginären geometrischen Linie (F) und dem zweiten nach oben gewandten konvexen Abschnitt senkrecht zu der zweiten geraden imaginären geometrischen Linie (F) als b > B/Z definiert ist, wobei Z 80, 30 oder 20 ist.

14. Fahrzeugaufhängung (100), umfassend eine Blattfederanordnung (10, 16, 22, 23, 23a, 26) nach einem der Ansprüche 1-13, wobei die Blattfederanordnung eine erste Blattfederanordnung ist, wobei die Fahrzeugaufhängung ferner Folgendes umfasst:
- eine zweite Blattfederanordnung nach einem der Ansprüche 1-13 und
- eine Achse (40), die dazu konfiguriert ist, sich quer zu dem Fahrzeugrahmen (18) zu erstrecken, wobei die Achse an den zwei Blattfedern der jeweiligen Blattfederanordnungen der Achsenanbringungsabschnitte (42) montiert ist.

15. Fahrzeug (1), umfassend eine Blattfederanordnung (10, 16, 22, 23, 23a, 26) nach einem der Ansprüche 1-13 oder eine Fahrzeugaufhängung (100) nach Anspruch 14.

## Revendications

1. Agencement de ressort à lame (10, 16, 22, 23, 23a, 26), pour une utilisation dans la suspension d'un véhicule (100), comprenant :
- un ressort à lame (10) qui comprend :
• une surface inférieure (46) configurée pour être orientée vers le sol,
• une surface supérieure (48) située à l'opposé de la surface inférieure et qui est configurée pour être orientée vers le haut,
• une première extrémité (12),
• une seconde extrémité (14),
dans lequel la surface supérieure et la surface inférieure s'étendent longitudinalement de la première à la seconde extrémité,
- un premier support (16) configuré pour être fixé rigidement à un châssis de véhicule (18) à une première position du châssis,
- un second support (26) configuré pour être fixé rigidement au châssis de véhicule à une seconde position du châssis,
- une manille (22) reliée de manière pivotante au second support, et
- un élément de butée (23, 23a) limitant le mouvement de pivotement de la manille,
dans lequel l'élément de butée limite l'extension du ressort à lame,
dans lequel la première extrémité du ressort à lame est reliée au premier support,
dans lequel la seconde extrémité du ressort à lame est reliée à la manille afin de compenser les changements de longueur du ressort à lame en réponse aux charges de couple de freinage sur le ressort à lame, dans lequel l'agencement de ressort à lame absorbe au moins partiellement les charges de couple de freinage sans surcharger le ressort à lame en raison de l'élément de butée limitant l'extension du ressort à lame, dans lequel le ressort à lame s'étend vers le bas (53) à partir de la manille, et
dans lequel le ressort à lame s'étend vers le haut (51) à partir de sa première extrémité.

2. Agencement de ressort à lame (10, 16, 22, 23, 23a, 26) selon la revendication 1, dans lequel l'élément de butée (23, 23a) est configuré pour empêcher la manille (22) d'atteindre une position d'instabilité dans laquelle la manille perdrait sa capacité d'appui par rapport au ressort à lame (10).

3. Agencement de ressort à lame (10, 16, 22, 23, 23a, 26) selon l'une quelconque des revendications 1 à 2, dans lequel le ressort à lame (10) comprend :
- une partie de fixation à l'essieu (42) située entre la première extrémité (12) et la seconde extrémité (14), la partie de fixation à l'essieu étant configurée pour être fixée à un essieu (40) de sorte que l'extension longitudinale des surfaces supérieure et inférieure du ressort à lame soit orientée transversalement par rapport à l'essieu,
- une première partie convexe (50) orientée vers le haut, formée entre la première extrémité et la partie de fixation à l'essieu, et
- une seconde partie concave (52) orientée vers le haut, formée entre la partie de fixation de l'essieu et la seconde extrémité.

4. Agencement de ressort à lame (10, 16, 22, 23, 23a, 26) selon la revendication 3, dans lequel l'élément de butée (23, 23a) est configuré pour empêcher la manille (22) de pivoter au-delà d'un angle prédéfini (α2, α3), dans lequel, lorsque la manille est pivotée jusqu'à l'angle prédéfini et étend ainsi le ressort à lame (10), la seconde partie concave orientée vers le haut (52) du ressort à lame conserve une forme concave orientée vers le haut bien que présentant un rayon de courbure plus grand que sa forme concave orientée vers le haut d'origine.

5. Agencement de ressort à lame (10, 16, 22, 23, 23a, 26) selon l'une quelconque des revendications 3 à 4, dans lequel la partie de fixation à l'essieu (42) est la partie la plus épaisse du ressort à lame (10).

6. Agencement de ressort à lame (10, 16, 22, 23, 23a, 26) selon l'une quelconque des revendications 3 à 5, dans lequel la seconde partie concave orientée vers le haut (52) s'étend vers le haut à partir de la partie de fixation à l'essieu (42) jusqu'à la seconde extrémité (14).

7. Agencement de ressort à lame (10, 16, 22, 23, 23a, 26) selon l'une quelconque des revendications 3 à 5, dans lequel la seconde partie concave (52) orientée vers le haut est formée par :
- une première sous-partie (56), qui s'étend vers le bas depuis la partie de fixation à l'essieu (42) jusqu'à un point le plus bas (58) de la seconde partie concave orientée vers le haut, et
- une seconde sous-partie (60) qui s'étend vers le haut depuis ledit point le plus bas (58) jusqu'à la seconde extrémité (14).

8. Agencement de ressort à lame (10, 16, 22, 23, 23a, 26) selon la revendication 7, dans lequel la seconde sous-partie (60) présente une pente plus forte à partir du point le plus bas (58) à la seconde extrémité (14) par rapport à la pente de la première sous-partie (56) à partir du point le plus bas (58) à la partie de fixation à l'essieu (42).

9. Agencement de ressort à lame (10, 16, 22, 23, 23a, 26) selon l'une quelconque des revendications 7 à 8, dans lequel l'extension de la seconde sous-partie (60) forme une trajectoire courbe depuis ledit point le plus bas (58) jusqu'à la seconde extrémité (14), le plus petit rayon de courbure de la seconde sous-partie étant inférieur à tout rayon de courbure de la première sous-partie (56).

10. Agencement de ressort à lame (10, 16, 22, 23, 23a, 26) selon l'une quelconque des revendications 3 à 9, dans lequel la première extrémité (12) comprend un premier anneau d'extrémité (20) et la seconde extrémité (14) comprend un second anneau d'extrémité (24), dans lequel la distance la plus courte entre lesdits premier et second anneaux d'extrémité définit une ligne de référence géométrique (D), dans laquelle
- un point intermédiaire sur la ligne de référence est séparé du centre de la partie de fixation à l'essieu (42) par une distance C, qui est la distance la plus courte entre le centre de la partie de fixation à l'essieu et la ligne de référence (D),
- le premier anneau d'extrémité (20) est séparé dudit point intermédiaire par une première longueur A prédéterminée le long de ladite ligne de référence,
- le second anneau d'extrémité (24) est séparé dudit point intermédiaire par une seconde longueur B prédéterminée le long de ladite ligne de référence (D).

11. Agencement de ressort à lame (10, 16, 22, 23, 23a, 26) selon la revendication 10,
dans lequel la relation entre ladite distance C, ladite première longueur prédéterminée A, et ladite seconde longueur prédéterminée B est :
C > (A+B)/X où X est égal à 80, 30, ou 15.

12. Agencement de ressort à lame (10, 16, 22, 23, 23a, 26) selon l'une quelconque des revendications 10 à 11, dans lequel une première ligne géométrique imaginaire droite (E) peut être tracée entre les points d'extrémité de la première partie convexe orientée vers le haut (50), à partir de la première extrémité (12) à la partie de fixation à l'essieu (42), dans lequel, perpendiculairement à la première ligne géométrique imaginaire droite, la plus grande distance a entre la première ligne géométrique imaginaire droite et la première partie convexe orientée vers le haut (50) est définie comme :
*a* > A/Y où Y est égal à 80, 30, ou 20.

13. Agencement de ressort à lame (10, 16, 22, 23, 23a, 26) selon l'une quelconque des revendications 10 à 12, dans lequel une seconde ligne géométrique imaginaire droite (F) peut être tracée entre les points d'extrémité de la seconde partie concave orientée vers le haut (52), depuis la seconde extrémité (14) jusqu'à la partie de fixation à l'essieu (42), dans lequel, perpendiculairement à la seconde ligne géométrique imaginaire droite (F), la plus grande distance b entre la seconde ligne géométrique imaginaire droite (F) et la seconde partie concave orientée vers le haut est définie comme *b* > B/Z, dans lequel Z est égal à 80, 30 ou 20.

14. Suspension de véhicule (100) comprenant un agencement de ressort à lame (10, 16, 22, 23, 23a, 26) selon l'une quelconque des revendications 1 à 13, dans laquelle ledit agencement de ressort à lame est un premier agencement de ressort à lame, la suspension de véhicule comprenant en outre :
- un second agencement de ressort à lame selon l'une quelconque des revendications 1 à 13, et
- un essieu (40) configuré pour s'étendre transversalement par rapport au châssis de véhicule (18), lequel essieu étant monté sur les deux ressorts à lame des agencements respectifs de ressort à lame au niveau desdites parties de fixation à l'essieu (42).

15. Véhicule (1) comprenant un agencement de ressort à lame (10, 16, 22, 23, 23a, 26) selon l'une quelconque des revendications 1 à 13 ou une suspension de véhicule (100) selon la revendication 14.
